# FASCICULE DE BREVET EUROPEEN

(11) **EP 0 362 082 B1**
(45) Date de publication et mention de la délivrance du brevet: **03.02.1993**
(21) Numéro de dépôt: 89420340.5
(22) Date de dépôt: 12.09.1989
(51) Int. Cl.: B60R 9/10

(54) **Plateforme support s'adaptant sur des véhicules du type caravane**
Gepäckträger für Wohnmobile und dergleichen
Carrying framework adapted to caravans

(30) Priorité: 13.09.1988 FR 8812291
(43) Date de publication de la demande: 04.04.1990
(73) Titulaire: Fiol, James, F-42140 Chazelles-sur-Lyon (FR)
(72) Inventeur: Fiol, James, F-42140 Chazelles-sur-Lyon (FR)
(74) Mandataire: Dupuis, François

(56) Documents cités:
- EP-A- 0 041 889
- CH-A- 258 744
- DE-A- 3 235 248
- FR-A- 2 604 960
- US-A- 3 794 227

## Description

L'invention a pour objet une plateforme support de bicyclettes fixée à l'arrière des véhicules du type caravane, camping-car, fourgon en véhicules similaires présentant un côté arrière vertical.

Les plateformes existantes sont encombrantes, ont un empâtement d'environ 1 mètre correspondant à une hauteur de bicyclette pour adulte prise au niveau du cadre horizontal.

Ces plateformes qui sont destinées à s'appliquer à l'arrière des véhicules du type précité présentent un inconvénient majeur qui est d'obturer les fenêtres ouvrantes ou non de caravanes et similaires et d'empêcher leur ouverture le cas échéant, ceci de par leur empattement trop important.

Cela vient du fait que les plateformes sont agencées avec des profilés en forme de U formant échelle qui viennent se fixer de part et d'autre de ladite ouverture ou fenêtre.

En outre le positionnement de la ou des bicyclettes est peu pratique car il faut que l'utilisateur les saisisse et les soulève pour les positionner et les fixer sur la plateforme. De telles manipulations peuvent provoquer des salissures par les contacts involontaires des vêtements sur la chaîne de la ou des bicyclettes. La fixation de profilés en U est souvent peu pratique car elle s'effectue sur des zônes supérieure et inférieure de la carrosserie laissant peu d'espace pour la fixation et pouvant être source d'un déréglage. En outre, dans le cas de véhicules équipés à l'arrière d'un petit coffre, tel par exemple certains camping-cars, l'utilisation des plateformes actuelles est gênante pour leur accès ou ne permet pas celui-ci.

On connait également par le document DE-A-3 235 248 une plateforme support de bicyclettes fixée sur le panneau arriere de caravanes. Cette plateforme comprend une armature à éléments telescopiques obturant la quasi totalité dudit panneau avec un encombrement maximum.

Le but recherché selon l'invention était de remédier à ces inconvénients et de proposer une solution simple, pratique et de faible encombrement, et permettre l'ouverture de toutes fenêtres arrière de véhicules et accessoirement l'accés aux coffres disposés à l'arrière de certains.

Selon une première caracteristique de l'invention la plateforme est caractérisé en ce que la première armature (1) est constituée de deux montants profilés en L (3 - 4) entretoisés, à leur partie inférieure, et agencés pour recevoir, à leur partie inférieure et près de leur partie supérieure, deux moyens de fixation sur la face arrière du panneau du véhicule entre son soubassement et l'encadrement de fenêtre, les deux moyens de fixation étant disposés pour l'un en position d'articulation sous toutes parties vitrées ouvrantes ou non du type fenêtres, et pour l'autre assurant la fonction complémentaire d'entretoise de liaison des montants profilés (3 - 4) en étant au-dessus du soubassement ou de la partie "petit coffre" pour certains véhicules, ladite première armature recevant, dans sa partie supérieure, à articulation, et en débordement supérieur desdits montants (3 - 4), un support de potence solidarisé et verrouillé en position par rapport auxdits montants (3 - 4), ladite seconde armature (2) profilée en U, articulée par rapport à la première armature, ceinturant par l'extérieur les montants (3 et 4) de ladite première armature et étant agencée pour recevoir les barres supports de roues de bicyclettes.

Ces caractéristiques et d'autres encore ressortiront bien de la suite de la description.

Pour fixer l'objet de l'invention, illustré d'une manière non limitative aux figures des dessins, où:

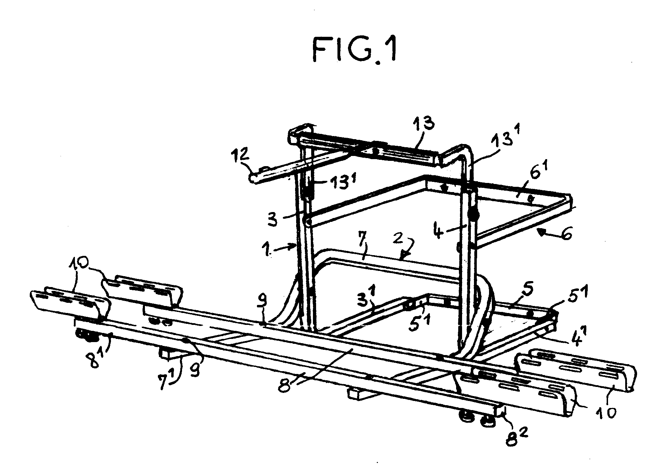

La figure 1 est une vue en perspective d'une plateforme selon l'invention.

La figure 2 est uen vue de côté de la plateforme fixée à l'arrière d'une caravane et en position d'utilisation.

La figure 3 est une vue de côté de la plateforme selon la figure 3 en position repliée.

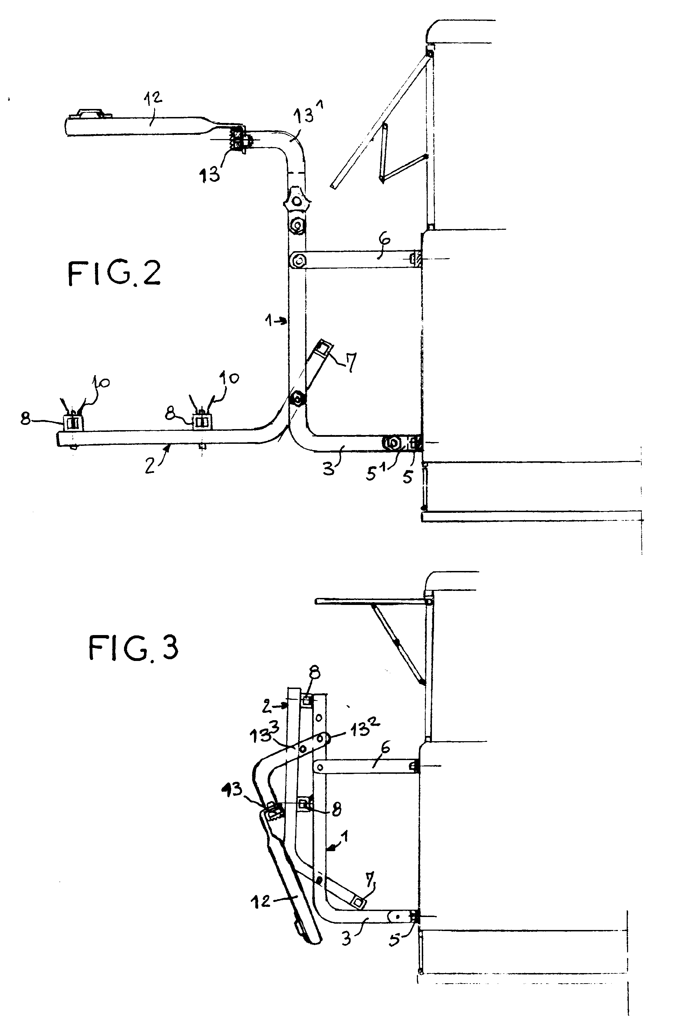

La plateforme comprend essentiellement deux armatures supports (1 et 2) articulées l'une par rapport à l'autre. La première armature (1) comprend deux montants (3 et 4) profilés en L, entretoisées et dont l'aile (3.1 - 4.1) est orientée vers le bas à l'horizontal. Entre lesdites ailes, est disposé un premier moyen de fixation réalisé par exemple sous la forme d'une traverse (5) profilée venant en appui contre le panneau arrière du véhicule et avantageusement au-dessus du soubassement ou du petit coffre du véhicule. La traverse présente à ses extrémités des pattes (5.1) agencées pour sa fixation sur le montant (3 et 4). La première armature reçoit sensiblement, dans sa partie supérieure, le second moyen de fixation à savoir par exemple un étrier (6) profilé en U, de plus grande profondeur, pour correspondre au déport en L de l'armature, de sorte que la première traverse (5) et la seconde traverse (6.1) correspondant au fond de l'étrier (6) soient dans le même plan pour leur fixation. Lesdites traverses peuvent être sensiblement orientées pour s'adapter au profil du panneau arrière du véhicule. Selon une disposition importante de l'invention, l'écartement entre les moyens de fixation constitué par la traverse (5) et l'étrier (6) en position horizontale est très faible de l'ordre de 30 à 40 centimètres permettant ainsi la fixation de la première armature entre le soubassement du véhicule et accessoirement au-dessus du petit coffre d'un véhicule et sous l'encadrement de fenêtre ou similaire, ceci sans gêner ou constituer un obstacle à son ouverture ou fermeture ainsi qu'illustré aux figures 2 et 3.

La seconde armature présente un longeron profilé (7) en forme de U dont la base est déportée pour constituer une forme en L. Ce longeron forme étrier et ceinture par l'extérieur les montants (3 et 4) de la première armature,et se prolonge vers l'avant dans un plan horizontal pour former deux bras (7.1 et 7.2) de la plateforme. Ces bras ainsi constitués et parallèles sont agencés pour recevoir une ou des barres (B) de manière démontable par des moyens de fixation (9) appropriés. Ces barres reçoivent à leurs extrémités (8.1 - 8.2) des éléments profilés (10) en forme de glissières en V pour recevoir, guider et maintenir les roues de bicyclettes. Des sangles de liaison (11) introduites par des ouvertures ménagées sur les glissièrs permettent de ceinturer lesdites roues.

Afin de tenir la ou les bicyclettes dans une position sensiblement verticale, une potence (12) est fixée sur un support profilé (13) articulé prêt de l'extrémité supérieure de la première armature. Cette potence est orientée du côté des barres (8). Ce support (13) est réalisé par exemple sous la forme d'une bande méplate profilée en U dont les ailes (13.1) sont elles-même recourbées en L dans un plan perpendiculaire. Les extrémités desdites ailes sont agencées avec chacune deux ouvertures (13.2 - 13.3), l'une pour autoriser l'articulation du support de potence par rapport à la première armature, l'autre pour assurer l'introduction d'un moyen de verrouillage en position sur ladite armature. Cette dernière est ainsi agencée avec des trous pour le passage des moyens d'articulation et de verrouillage précités. Le support (13) reçoit de manière fixe ou démontable la potence (15) qui est restée en position horizontale en cas d'utilisation de la plateforme. Cette potence est agencée pour recevoir un ou des moyens de retenue sous forme de sangles d'attache (16) entourant le tube de selle de la bicyclette.

En cas de non utilisation, la plateforme est repliable sur elle-même pour pivotement du support de potence, et de la second armature en égard de la première. Plus particulièrement, la potence est basculée entre les barres supports de bicyclettes et pivotée. La traverse et l'étrier de fixation sont également basculés. On obtient ainsi un encombrement minimum.

Les avantages ressortent bien de l'invention. On souligne la simplicité de la réalisation de la plateforme. Elle est fixée à faible hauteur et facilite donc, le positionnement des bicyclettes sans effort. Son empattement de fixation est réduit et permet ainsi l'ouverture des fenêtres arrière de véhicules et accés au petit coffre inférieur sans difficulté.

## Revendications

1. Plateforme support de bicyclettes destinée à être fixée à l'arrière de véhicule du type caravane, camping-car, fourgon, et véhicules similaires, du type comprenant une première armature agencée pour être fixée, par ses extrémités, sur la face arrière du panneau du véhicule, ladite armature recevant, dans sa partie supérieure, un support articulé de potence, et une seconde armature orientable par rapport à la première armature et agencée pour recevoir des barres supports de bicyclettes,
caractérisé en ce que la première armature (1) est constituée de deux montants profilés en L (3 - 4) entretoisés, à leur partie inférieure, et agencés pour recevoir, à leur partie inférieure et près de leur partie supérieure, deux moyens de fixation sur la face arrière du panneau du véhicule entre son soubassement et l'encadrement de fenêtre, les deux moyens de fixation étant disposés pour l'un en position d'articulation sous toutes parties vitrées ouvrantes ou non du type fenêtres, et pour l'autre assurant la fonction complémentaire d'entretoise de liaison des montants profilés (3 - 4) en étant au-dessus du soubassement ou de la partie "petit coffre" pour certains véhicules, ladite première armature recevant, dans sa partie supérieure, à articulation, et en débordement supérieur desdits montants (3 - 4), un support de potence solidarisé et verrouillé en position par rapport auxdits montants (3 - 4), ladite seconde armature (2) profilée en U, articulée par rapport à la première armature, ceinturant par l'extérieur les montants (3 et 4) de ladite première armature et étant agencée pour recevoir les barres supports de roues de bicyclettes.

2. Plateforme selon la revendication 1, caractérisée en ce que la première armature (1) comprend deux montants (3 et 4) profilés en L et entretoisés, dont les ailes (3.1 et 4.1) sont orientées vers le bas à l'horizontal, et entre lesquels est disposée et articulée un premier moyen de fixation établi sous forme d'une traverse (5), la partie supérieure de ladite armature (1) recevant le second moyen de fixation établi sous forme d'un étrier (6) profilé en U de grande profondeur pour être dans le plan de la première traverse, l'écartement entre les zônes de fixation de la première armature sur la face arrière du véhicule étant de 30 à 40 centimètres.

3. Plateforme selon les revendications 1 et 2 ensemble, caractérisée en ce que l'extrémité supérieure de la première armature reçoit à articulation et verrouillage un support (13) de potence (12) orientée du côté des barres supports des roues de bicyclettes, ledit support étant réalisé à partir d'une bande méplate profilée en U dont les ailes (13.1) sont elles-mêmes recourbées en L et dont les extrémités sont fixées auxdits montants (3 et 4).

## Patentansprüche

1. Ladebühne zur Aufnahme von Fahrrädern, die zur Befestigung am Hinterteil der Kraftwagen in der Ausführung als Wohnungsanhängerwagen, Campingwagen, Gepäckwagen und gleichartige Kraftwagen entwickelt ist, und die der typischen Ausführung gehört, die ein erstes, zur Befestigung bei den Enden auf der Oberfläche der Wagenhinterwand vorgesehenes Gerüst aufweist, das in dessen Oberteil einen gelenkigen Auslegerträger aufnimmt, und ein zweites Gerüst auch aufweist, das orientierbar in bezug auf das erste Gerüst ist, und als Aufnahme für die Fahrradstragstangen dient,
dadurch gekennzeichnet, dass das erste Gerüst (1) aus zwei L-profilierten, am Unterteil querverstrebten Ständern (3 - 4) besteht, die an diesem Unterteil und in der Nähe ihres Oberteils für die Aufnahme zweier Vorrichtungen für die Befestigung auf der Oberfläche der hinteren Wagenwand zwischen dem Grundteil des Wagens und dem Fensterrahmen vorgesehen sind ; dass die zweie Befestigungsvorrichtungen mit der einen in gelenkiger Stellung unter jedem fensterartigen, öffnenden oder nicht öffnenden verglastem Teil des Wagens und der anderen zum Bewirken der ergänzenden Funktion einer Verbindungsquerstrebe der profilierten Ständer (3 - 4) angeordnet sind, wobei die zweite Befestigungsvorrichtung oberhalb des Grundteils oder des "Kleinkofferteils" bei gewissen Wagenausführungen verbleibt ; und dass das besagte erste Gerüst, in dessen Oberteil einen gelenkigen, oberhalb der besagten Ständer (3 - 4) herausragenden Auslegerträger aufnimmt, der festgemacht und stellungsgesperrt mit bezug auf die genannten Ständer (3 - 4) ist, wobei das zweite Gerüst (2), die U-förmig und gelenkig mit bezug auf das erste Gerüst ist, die Ständer (3 und 4) des besagten Gerüsts von aussen her umfasst und zur Aufnahme der Tragstangen für die Fahrradräder vorgesehen ist.

2. Ladebühne nach Anspruch 1, dadurch gekennzeichnet, dass das erste Gerüst (1) zwei L-förmigen und querverstrebten Ständer (3 und 4) aufweist, derer (3.1 und 4.1) nach unten in der Längsrichtung orientiert sind und zwischen welchen ein erstes, ouerbalkenförmiges Befestigungsmittel (5) vorgesehen und gelenkig angebracht ist, wobei der Oberteil des beagten Gerüsts (1) das zweite, bügelförmige, als U grösserer Tiefe profilierte Befestigungsmittel (6) aufnimmt, das sich somit in der Ebene des ersten querbalkenförmigen Befestigungsmittel befindet ; und dass der Abstand zwischen den Befestigungszonen des ersten Gerüsts auf der Oberfläche der Wagenhinterwand etwa 30 bis 40 Zentimeter beträgt.

3. Ladebühne nach Ansprüchen 1 und 2 zusammen, dadurch gekennzeichnet, dass das Oberende des ersten Gerüsts gelenkig und sperrfähig einen Träger (13) für den Ausleger (12) aufnimmt, der nach der Seite der Tragstangen für die Fahrradsräder orientiert wird, wobei der genannte Träger aus einer abgeflachten, U-profilierten Leiste besteht, deren Schenkel (13.1) ihrerseits L-förmig gekrümmt sind, indem die Enden dieser Schenkel auf den genannten Ständern (3 und 4) befestigt werden.

## Claims

1. Supporting paltform for bicycles to be secured to the rear part of vehicles of the caravan type, or camping-car, van and vehicles of similar type, including a first armature of frame or armature arranged for being fastened by the ends thereof on the rear face of the panel of the vehicle, said armature accommodating in the upper part thereof a hingedly linked jib support, and a second armature orientable relative to the first one and arranged for receiving the supporting bars for the bicycles,
characterized in that the first armature (1) consists of two L-shaped posts (3 - 4) braced at the lower part thereof, and arranged for receiving at said lower part and adjacent to their upper part, two securing means on the rear face of the panel of the vehicle, between the base portion thereof and the window-frame, the two securing means being so disposed that one of them will be in a hingedly linked position underneath any opening or non-opening glazed part of the window type, while the other one will assume the complementary function of a connecting brace for the contoured posts (3 - 4), being located above the base-part or above the "small compartment portion" for some given vehicles, said first armature accommodating, in the upper portion thereof, in a hinged linking manner and upwardly projecting from said posts (3 - 4), a jib support which is made fast and positioned interlockingly relative to said posts (3 - 4), said second armature (2), which is U-shaped and hingedly linked relative to the first armature, surrounding from outside the posts (3 and 4) of said first armature and being arranged for receiving the supporting bars for the wheels of the bicycles.

2. Platform according to Claim 1, characterized in that the first armature (1) includes two L-shaped and braced posts (3 and 4) the wings (3.1 and 4.1) of which are oriented downwardly along the horizontal, there being disposed and linked hingedly between these posts a first securing means in the form of a cross-piece (5), the upper portion of said armature (1) accommodating the second securing means in the form of a U-shaped strap (6) of substantial depth, extending within the plane of the first cross-piece, the spacing between the securing areas of the first armature on the rear face of the vehicle being in the order of 30 - 40 centimetres.

3. Platform according to Claims 1 and 2 together, characterized in that the upper end of the first armature receives for hinged linking and interlocking a support (13) of a jib (12) oriented towards the side of the supporting bars for the wheels of the bicycles, said support being made of a U-shaped flattened strip the wings (13.1) of which are in turn L-curved, and the ends of which are fastened to said posts (3 and 4).
